# EUROPÄISCHE PATENTSCHRIFT

(11) **EP 2 462 497 B1**
(45) Veröffentlichungstag und Bekanntmachung des Hinweises auf die Patenterteilung: **09.01.2019**
(21) Anmeldenummer: 10743077.9
(22) Anmeldetag: 03.08.2010
(51) Int. Cl.: G06F 3/042, G06F 3/0488, B60K 37/06, B60K 35/00

(54) **VERFAHREN ZUM BETREIBEN EINER BEDIENVORRICHTUNG UND BEDIENVORRICHTUNG IN EINEM FAHRZEUG**
METHOD FOR OPERATING A CONTROL DEVICE AND CONTROL DEVICE IN A CAR.
PROCÉDÉ PERMETTANT DE FAIRE FONCTIONNER UN DISPOSITIF DE COMMANDE ET DISPOSITIF DE COMMANDE DANS UN VEHICULE

(30) Priorität: 06.08.2009 DE 102009036369
(43) Veröffentlichungstag der Anmeldung: 13.06.2012
(73) Patentinhaber: Volkswagen Aktiengesellschaft, 38440 Wolfsburg (DE)
(72) Erfinder: WÄLLER, Christoph, 38106 Braunschweig (DE); BACHFISCHER, Katharina, 40476 Düsseldorf (DE); BENDEWALD, Lennart, 38442 Wolfsburg (DE)
(74) Vertreter: Reitstötter Kinzebach
(86) Internationale Anmeldenummer: PCT/EP2010/061259
(87) Internationale Veröffentlichungsnummer: WO 2011/015570

(56) Entgegenhaltungen:
- DE-A1-102006 037 154
- DE-A1-102007 005 027

## Beschreibung

Die vorliegende Erfindung betrifft ein Verfahren zum Betreiben einer Bedienvorrichtung, insbesondere in einem Fahrzeug, wobei die Bedienvorrichtung ein Bedienelement mit einer Bedienoberfläche umfasst. Bei dem Verfahren wird ein Detektionsbereich gebildet, der in mehrere Detektionszonen unterteilt ist. Ferner wird die Aufenthaltsdauer eines Betätigungselements in den einzelnen Detektionszonen bestimmt. Ferner betrifft die Erfindung eine Bedienvorrichtung, insbesondere in einem Fahrzeug, mit einem Bedienelement, das eine Bedienoberfläche aufweist. Die Bedienvorrichtung umfasst ferner eine Annäherungserfassungseinrichtung, mit der ein Betätigungselement in einem Detektionsbereich, der in mehrere Detektionszonen unterteilt ist, erfassbar ist und mit der die Aufenthaltsdauer des Betätigungselements in den einzelnen Detektionszonen bestimmbar ist.

In einem Fahrzeug, insbesondere in einem Kraftfahrzeug, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die z. B. eine Telefonanlage und Einrichtungen zur Wiedergabe von Musik und Sprache, wie ein Radio oder einen CD- Spieler, umfassen.

Um die vielfältigen Einrichtungen im Fahrzeug bedienen zu können, werden in Fahrzeugen vielfach zentrale Multifunktionsbediensysteme eingesetzt, welche eine oder mehrere Multifunktionsanzeige(n) und Bedienelemente umfassen, mit denen die im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Aus der EP 0 366 132 B1 ist ein Multifunktionsbediensystem bekannt, bei dem die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 A1 ist ein Multifunktionsbediensystem bekannt, das einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, eine Anzeigefläche mit einer berührungsempfindlichen Oberfläche auszustatten. Beispielsweise kann die Anzeigefläche mit einer Folie oder Beschichtung versehen werden, deren Berührung positionsaufgelöst detektiert werden kann. Solche Anzeigeflächen mit einer berührungsempfindlichen Oberfläche werden auch als Touchscreen bezeichnet. Bei einem Touchscreen erfolgt die Bedienung dadurch, dass der Nutzer z. B. mit seiner Fingerspitze den Touchscreen berührt. Die Position der Berührung und ggf. die Bewegung während der Berührung wird erfasst, ausgewertet und einem Bedienschritt zugeordnet. Um den Nutzer bei der Bedienung zu unterstützen, werden auf der Anzeigefläche virtuelle Bedienelemente als graphische Schaltflächen dargestellt. Eine Anzeigevorrichtung mit einer berührungsempfindlichen Oberfläche, die in einem Fahrzeug eingesetzt wird, ist beispielsweise in der DE 10 2006 032 117 A1 beschrieben.

Für die Bedienung der vielfältigen Einrichtungen eines Fahrzeugs ergeben sich sehr spezielle Anforderungen, da die Bedienung unter anderem durch den Fahrer erfolgen kann. Es ist sehr wichtig, dass der Bedienvorgang und die damit verbundene Informationsaufnahme nicht zu einer Ablenkung des Fahrers während der Fahrt führt. Der Bedienvorgang sollte daher so wenig Aufmerksamkeit vom Fahrer erfordern wie möglich und außerdem schnell durchführbar sein. Des Weiteren sollten die Bedienelemente auch dann sicher und schnell betätigt werden können, wenn im Fahrzeug Vibrationen auftreten oder sich das Fahrzeug auf einer unebenen Fahrbahn bewegt.

Um die Bedienung einer berührungsempfindlichen Oberfläche eines Touchscreens zu erleichtern, wurde in der DE 10 2006 037 154 A1 und der DE 10 2006 037 156 A1 vorgeschlagen, die Position eines Betätigungselements zu detektieren, bevor es die berührungsempfindliche Oberfläche berührt. Beispielsweise wird die Annäherung eines Fingers eines Nutzers als Bedienabsicht interpretiert. Falls eine solche Bedienabsicht festgestellt wird, kann die auf der Anzeigefläche dargestellte Information so verändert werden, dass der Touchscreen leichter bedient werden kann. Bei einer erfassten Bedienabsicht werden insbesondere Schaltflächen vergrößert dargestellt, so dass sie vom Nutzer leichter getroffen werden können.

Die DE 10 2006 037 154 A1 beschreibt ein Navigationsgerät und ein Verfahren zum Betreiben eines Navigationsgeräts. Um eine einfachere und intuitivere Bedienung des Navigationsgeräts zu ermöglichen, wird vorgeschlagen, das Navigationsgerät mit einer Anzeigevorrichtung und einer Sensoreinheit zum Ermitteln einer Position eines Körperteils eines Nutzers relativ zu einer Anzeigefläche der Anzeigevorrichtung vorzusehen. Beim Betreiben des Navigationsgeräts wird der Abstand des Körperteils von der Anzeigefläche erfasst und die Ausschnittsvergrößerung der Navigationsinformation in Abhängigkeit von dem ermittelten Abstand angepasst. Hierfür ist der Raum vor der Anzeigevorrichtung in Teilvolumina, insbesondere in Zonen und Sektoren, unterteilt. Die Verweildauer eines Körperteils, wie beispielsweise des Fingers, in einem Teilvolumen wird erfasst. In Abhängigkeit von der Verweildauer des Fingers wird eine zugeordnete Aktion, wie beispielsweise eine Maßstabsveränderung der angezeigten Karte oder ein Verschieben eines Anzeigeinhalts, ausgeführt.

Des Weiteren beschreibt die DE 10 2007 005 027 A1 eine Anzeige- und Bedienvorrichtung mit einer interaktiven Benutzerschnittstelle. Eine Positionsbestimmungseinheit ermittelt die dreidimensionale Position eines Körperteils und die Benutzerschnittstelle ist ausgestaltet, interaktiv in Abhängigkeit von der ermittelten Position beeinflusst zu werden.

Bei einer Bedienvorrichtung, bei welcher ein Betätigungselement vor der Bedienoberfläche erfasst wird, um auf eine Bedienabsicht des Nutzers zu schließen, ergibt sich jedoch folgendes Problem: Falls der Nutzer das Betätigungselement nur an der Bedienoberfläche vorbeibewegt, um z. B. ein Bedienelement zu betätigen, das neben der Bedienoberfläche angeordnet ist, wird die sich dabei ergebene Annäherung des Betätigungselements an die Bedienoberfläche bereits als Bedienabsicht zur Betätigung der Bedienoberfläche interpretiert. Die sich hieraus ergebenen Veränderungen des Anzeigeinhalts sind jedoch unerwünscht, wenn der Nutzer die Bedienoberfläche überhaupt nicht betätigen will. Derartige Fehlinterpretationen aufgrund der Detektion eines Betätigungselements vor einer Bedienoberfläche sollten vermieden werden.

Der vorliegenden Erfindung liegt die Aufgabe zugrunde ein Verfahren und eine Bedienvorrichtung der Eingangs genannten Art bereitzustellen, bei denen die Absicht eines Nutzers die Bedienoberfläche zu betätigen, fehlerfrei erfasst werden kann.

Diese Aufgabe wird erfindungsgemäß durch ein Verfahren mit den Merkmalen des Anspruchs 1 und eine Bedienvorrichtung mit den Merkmalen des Anspruchs 7 gelöst. Vorteilhafte Aus- und Weiterbildungen ergeben sich aus den abhängigen Ansprüchen.

Bei dem erfindungsgemäßen Verfahren sind die Detektionszonen so angeordnet, dass bei einer Bewegung des Betätigungselements in einer Richtung, die parallel zu der Bedienoberfläche ist, das Betätigungselement von einer Detektionszone in eine andere Detektionszone wechselt. Ferner wird bei dem erfindungsgemäßen Verfahren ein Signal für eine Bedienabsicht eines Nutzers erzeugt, wenn die Aufenthaltsdauer des Betätigungselements in einer Detektionszone einen Grenzwert überschreitet.

Durch die Anordnung der Detektionszonen bei dem erfindungsgemäßen Verfahren kann eine Bewegung mit einem Betätigungselement erfasst werden, die eine Bewegungskomponente umfasst, die parallel zu der Bedienoberfläche ausgerichtet ist. Das Betätigungselement kann zwar auch schräg zur Bedienoberfläche bewegt werden. Durch diejenige Bewegungskomponente einer solchen Bewegung, die parallel zu der Bedienoberfläche ausgerichtet ist, wechselt das Betätigungselement jedoch von einer Detektionszone in eine andere Detektionszone. Durch die Geometrie der Detektionszonen wird somit nicht - wie im Stand der Technik - eine Annäherung des Betätigungselements an die Bedienoberfläche durch einen Wechsel von einer Detektionszone in eine andere Detektionszone erfasst, sondern eine Bewegung parallel zu der Bedienoberfläche. Mittels des erfindungsgemäßen Verfahrens kann somit insbesondere eine Bewegung des Betätigungselements erfasst werden, die an dem Bedienelement mit der Bedienoberfläche vorbeigeführt wird, um beispielsweise ein anderes Bedienelement zu betätigen. Die Bewegung des Betätigungselements im Detektionsbereich wird nur dann als Bedienabsicht eines Nutzers für die Betätigung des Bedienelements mit der Bedienoberfläche interpretiert, wenn sich das Betätigungselement so langsam bewegt, dass ein Grenzwert für die Aufenthaltsdauer des Betätigungselements in einer der Detektionszonen überschritten wird. Nur in diesem Fall wird bei dem erfindungsgemäßen Verfahren davon ausgegangen, dass der Nutzer die Bedienoberfläche und nicht ein anderes Bedienelement außerhalb der Bedienoberfläche betätigen will.

Bei dem Betätigungselement kann es sich um ein beliebiges Element handeln, mit welchem die Bedienoberfläche betätigt werden kann. Es handelt sich bei dem Betätigungselement insbesondere um die Hand bzw. die Fingerspitze eines Nutzers. In dem Detektionsbereich wird insbesondere die Hand oder die Fingerspitze des Nutzers erfasst, bevor die Fingerspitze die Bedienoberfläche des Bedienelements berührt.

Die Detektionszonen grenzen insbesondere so aneinander, dass bei einer Bewegung des Betätigungselements in einer Richtung, die parallel zu der Bedienoberfläche ist, das Betätigungselement von einer Detektionszone unmittelbar in eine angrenzende Detektionszone wechselt. Das Betätigungselement wechselt insbesondere von einer Detektionszone unmittelbar in eine angrenzende Detektionszone, wenn es vor der Bedienfläche von einer Seite zur anderen Seite bewegt wird. Beispielsweise kann der Detektionsbereich ein Volumen vor der Bedienoberfläche umfassen, wobei sich die Detektionszonen insbesondere senkrecht von der Bedienoberfläche weg erstrecken. Demnach findet in diesem Fall kein Wechsel der Detektionszonen statt, wenn sich das Betätigungselement senkrecht zur Bedienoberfläche bewegt. Erst wenn die Bewegung eine Komponente parallel zu der Bedienoberfläche aufweist, findet nach einem bestimmten Zeitintervall, welches von der Größe der Geschwindigkeitskomponente parallel zur Bedienoberfläche abhängt, ein Wechsel der Detektionszonen statt.

Bei dem erfindungsgemäßen Verfahren unterscheidet sich der Grenzwert für zumindest zwei Detektionszonen. Der Grenzwert einer Detektionszone hängt dabei erfindungsgemäß von dem Abstand dieser Detektionszone von einer Bedienposition im Fahrzeug in einer zu der Bedienoberfläche parallelen Richtung ab. Gemäß einer Ausgestaltung ist dabei der Grenzwert für die Aufenthaltsdauer in einer Detektionszone umso kürzer, desto näher die Detektionszone an der Bedienposition eines Nutzers ist. Die Bedienposition kann beispielsweise der Fahrersitz des Fahrzeugs sein. Die Detektionszonen können das Volumen vor der Bedienoberfläche in diesem Fall so unterteilen, dass quaderförmige Volumina gebildet sind, die sich in vertikaler Richtung der Bedienoberfläche über die gesamte Bedienoberfläche erstrecken, wenn diese vertikal im Fahrzeug ausgerichtet ist. Die Grenzflächen zwischen den Detektionszonen sind dann vertikal ausgerichtet, so dass in horizontaler Richtung die Bedienoberfläche in n Detektionszonen unterteilt wird. Der Detektionszone, die dem Fahrersitz am nächsten ist, wird der niedrigste Grenzwert für die Aufenthaltsdauer zugeordnet, der Detektionszone, die am weitesten von dem Fahrersitz entfernt ist, wird der größte Grenzwert für die Aufenthaltsdauer zugeordnet. Die Detektionszonen zwischen diesen beiden äußersten Detektionszonen besitzen Grenzwerte, die in einem Bereich von dem Grenzwert für die am nächsten gelegene Detektionszone bis zu dem Grenzwert für die am entferntesten gelegene Detektionszone liegen können. Diese Zuordnung der Grenzwerte wird insbesondere aus der Analyse einer Greifbewegung eines Nutzers gewonnen, der von seiner Bedienposition aus entweder ein Ziel ansteuert, welches auf der Bedienoberfläche gelegen ist, oder ein Ziel ansteuert, das so neben der Bedienoberfläche gelegen ist, dass der Nutzer durch den Detektionsbereich durchgreifen muss. Die Grenzwerte für die Aufenthaltsdauer für die Detektionszonen werden somit insbesondere in Abhängigkeit von dem zeitlichen Verlauf einer Greifbewegung eines Nutzers zu der Bedienoberfläche des Bedienelements und von dem zeitlichen Verlauf einer Greifbewegung eines Nutzers zu einem Ziel außerhalb des Bedienelements ausgewählt.

Wenn das Betätigungselement in einer Detektionszone den dieser Detektionszone zugeordneten Grenzwert für die Aufenthaltsdauer überschritten hat, wird bei dem erfindungsgemäßen Verfahren davon ausgegangen, dass der Nutzer die Bedienoberfläche betätigen will. Daher wird ein Signal für eine Bedienabsicht des Nutzers erzeugt. Dieses Signal kann verschiedene Auswirkungen auf das Bedienelement haben. Beispielsweise kann eine die Betätigung des Bedienelements unterstützende Anzeige erzeugt werden. Ferner können Schaltflächen größer dargestellt werden, damit sie der Nutzer leichter treffen kann. Des Weiteren kann auch die Anzeige von einem Anzeigemodus in einen Bedienmodus wechseln. Wenn andererseits zwar ein Betätigungselement im Betätigungsbereich erfasst wird, die Aufenthaltsdauer in den Detektionszonen jedoch nicht den Grenzwert der jeweiligen Zone überschreitet, wird kein Signal für eine Bedienabsicht des Nutzers erzeugt und auch keine veränderte Anzeige erzeugt.

Bei der erfindungsgemäßen Bedienvorrichtung sind die Detektionszonen so angeordnet sind, dass bei einer Bewegung des Betätigungselements in einer Richtung, die parallel zu der Bedienoberfläche ist, das Betätigungselement von einer Detektionszone in eine andere Detektionszone wechselt. Des Weiteren ist die Annäherungserfassungseinrichtung so ausgebildet, dass ein Signal für eine Bedienabsicht eines Nutzers erzeugbar ist, wenn die Aufenthaltsdauer des Betätigungselements in einer Detektionszone einen Grenzwert überschreitet.

Die erfindungsgemäße Bedienvorrichtung ist insbesondere so ausgebildet, dass sie die vorstehend beschriebenen Verfahrensschritte insgesamt oder teilweise ausführen kann. Außerdem sind die Detektionszonen, welche von der Annäherungserfassungseinrichtung erzeugt werden, geometrisch so ausgebildet, wie es vorstehend mit Bezug zu dem erfindungsgemäßen Verfahren erläutert wurde. Wenn die Bedienoberfläche im Fahrzeug z.B. im Wesentlichen senkrecht ausgerichtet ist, sind auch die Grenzflächen zwischen benachbarten Detektionszonen bevorzugt senkrecht ausgerichtet. Ferner stehen sie senkrecht auf der Bedienoberfläche. Wenn der Nutzer somit das Betätigungselement vor der Bedienoberfläche horizontal von einer Seite zur anderen bewegt, wechselt er von einer Detektionszone zur benachbarten Detektionszone.

Der Grenzwert einer Detektionszone ist erfindungsgemäß von dem Abstand der Detektionszone von einer Bedienposition im Fahrzeug in einer zu der Bedienoberfläche parallelen Richtung abhängig. Bei der Bedienposition handelt es sich insbesondere um den Fahrersitz oder den Beifahrersitz. Insbesondere ist der Grenzwert für die Aufenthaltsdauer in einer Detektionszone dabei umso kürzer, desto näher die Detektionszone an der Bedienposition des Nutzers ist.

Die Annäherungserfassungseinrichtung kann beispielsweise eine Reflektionslichtschranke umfassen, die mindestens ein Leuchtmittel zum Emittieren von elektromagnetischer Detektionsstrahlung in den Detektionsbereich und ein Empfangselement zum Detektieren eines an dem Betätigungselement gestreuten und/oder reflektierten Anteils der Detektionsstrahlung umfassen. Sie kann insbesondere so ausgebildet sein, das Betätigungselement in dem Detektionsbereich anhand der Intensität der empfangenen Detektionsstrahlung zu erkennen. Die Annäherungserfassungseinrichtung kann ferner verschiedene Leuchtmittel für die einzelnen Detektionszonen umfassen, die jeweils elektromagnetische Detektionsstrahlung in die jeweilige Detektionszone emittieren. Ferner kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinrichtung auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungselement gestreut oder reflektiert wurde. Mittels der Annäherungserfassungseinrichtung kann somit die Aufenthaltsdauer eines Betätigungselement separat für jede Detektionszone bestimmt werden.

Sofern der Grenzwert für die Aufenthaltsdauer für die Detektionszonen unterschiedlich in Abhängigkeit von einer Bedienposition gewählt wird, kann bevorzugt außerdem eine Bedienpositionserfassungsvorrichtung vorgesehen sein, mit welcher die Bedienposition des Nutzers des Betätigungselements erfasst werden kann. In Abhängigkeit von dieser Bedienposition werden dann die Grenzwerte für die Detektionszonen festgelegt. Die Bedienpositionserfassungsvorrichtung kann z.B. einen Signalgeber umfassen, der ein schwaches elektrisches Hochfrequenzsignal in den Nutzer einkoppelt, der sich bei einer Bedienposition, wie z.B. einem Fahrzeugsitz, befindet. Dieses Hochfrequenzsignal kann von einer Empfangseinrichtung in der Nähe der Bedienoberfläche durch eine kapazitive Kopplung erfasst werden, sobald der Nutzer mit seinem Betätigungselement, insbesondere seiner Fingerspitze, in den Detektionsbereich eintritt, wodurch die Bedienposition des Nutzers ermittelt werden kann.

Bei der erfindungsgemäßen Bedienvorrichtung ist die Bedienoberfläche des Bedienelements insbesondere berührungsempfindlich. Es handelt sich insbesondere um eine berührungsempfindliche Bedienoberfläche einer Anzeigefläche. Das Bedienelement ist in diesem Fall somit ein Touchscreen. In diesem Fall können das Bedienelement, d. h. der Touchscreen, und die Annäherungserfassungseinrichtung mit einer Steuervorrichtung gekoppelt sein, mittels derer die auf der Anzeigefläche wiedergegebene Anzeige in Abhängigkeit von dem Signal für die Bedienabsicht eines Nutzers veränderbar ist. Wie bereits mit Bezug zu dem erfindungsgemäßen Verfahren erläutert, kann die Anzeige bei einer Bedienabsicht eines Nutzers so verändert werden, dass der Nutzer den Touchscreen leichter betätigen kann. Beispielsweise können Schaltflächen vergrößert dargestellt werden oder die Anzeige von einem Anzeigemodus in einen Bedienmodus wechseln.

Gemäß einer Ausgestaltung der erfindungsgemäßen Bedienvorrichtung ist neben der Bedienoberfläche zumindest ein weiteres Bedienelement so im Fahrzeug angeordnet, dass sich bei einer Betätigung des weiteren Bedienelements das Betätigungselement durch den Detektionsbereich bewegt. Mittels der Annäherungserfassungseinrichtung, kann in diesem Fall aus der jeweiligen Aufenthaltsdauer des Betätigungselements in den Detektionszonen ermitteln, ob der Nutzer das Bedienelement mit der Bedienoberfläche betätigen will oder das weitere Betätigungselement. Die Unterteilung des Detektionsbereichs in Detektionszonen kann insbesondere in Abhängigkeit von der relativen Lage des weiteren Bedienelements zu der Bedienoberfläche erfolgen. Da ein Vorbeiführen des Betätigungselements an der Bedienoberfläche in Richtung des weiteren Bedienelements detektiert werden soll, sind die Detektionszonen bevorzugt so angeordnet, dass bei dieser Bewegung die einzelnen Detektionszonen nacheinander durchlaufen werden. Die Grenzflächen zwischen benachbarten Detektionszonen sind daher bevorzugt senkrecht zu der Richtung ausgerichtet, die sich aus einer Verbindungsstrecke zwischen der Bedienposition und dem weiteren Bedienelement ergibt.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Bedienvorrichtung in einer Aufsicht,
- Figur 2: zeigt die Bedienvorrichtung des Ausführungsbeispiels in einer vertikalen Schnittansicht,
- Figur 3: zeigt die Geometrie des Detektionsbereichs in einer perspektivischen Ansicht,
- Figur 4: zeigt die Bewegung eines Betätigungselements bei einer Betätigung eines weiteren Bedienelements, das neben der Bedienoberfläche angeordnet ist,
- Figur 5A: zeigt einen Graph mit dem Zeit/Weg-Verlauf einer typischen Bewegung eines Betätigungselements,
- Figur 5B: zeigt den Geschwindigkeitsverlauf, der sich aus der in Fig. 5A gezeigten Bewegung ergibt, und
- Figur 6: zeigt den Geschwindigkeitsverlauf einer Bewegung eines Betätigungselements in Relation zu der Anordnung der Bedienoberfläche und eines weiteren Bedienelements außerhalb der Bedienoberfläche.

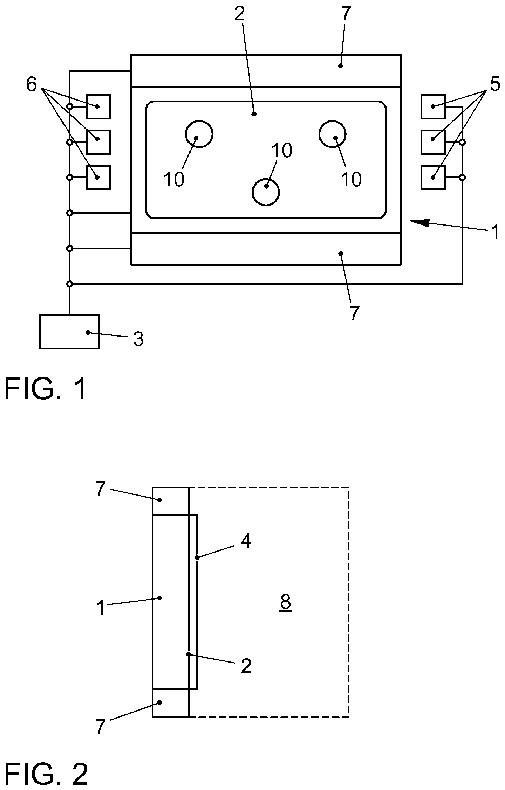

Im Folgenden wird ein Ausführungsbeispiel der erfindungsgemäßen Bedienvorrichtung mit Bezug zu den Fig. 1 bis 3 im Detail erläutert:
Die Bedienvorrichtung umfasst ein Bedienelement mit einer Bedienoberfläche 4. Im hier beschriebenen Ausführungsbeispiel ist die Bedienoberfläche 4 berührungsempfindlich ausgebildet und auf der Anzeigefläche 2 eine Anzeigevorrichtung 1 angeordnet. Es wird somit ein so genannter Touchscreen bereitgestellt. Die Anzeigefläche 2 mit der berührungsempfindlichen Bedienoberfläche 4 ist zentral im vorderen Bereich des Fahrzeugs zwischen dem Fahrersitz und dem Beifahrersitz angeordnet, so dass die Anzeigefläche 2 gut sowohl vom Fahrer als auch vom Beifahrer betrachtet und mit der Fingerspitze erreicht werden kann. Die Bedienoberfläche 4 kann somit von der Fingerspitze des Fahrers bzw. des Beifahrers betätigt werden. Der Finger bzw. die Fingerspitze stellt in diesem Fall ein Betätigungselement dar, mit dem die als Touchscreen ausgebildete Bedienoberfläche des Bedienelements betätigt werden kann.

Auf beiden Seiten der Anzeigefläche 2 sind jeweils weitere Bedienelemente 5 und 6 angeordnet. Bei diesen Bedienelementen kann es sich beispielsweise um Tastschalter handeln. Den Tastschaltern kann eine feste Funktion zugewiesen sein. Ferner kann einigen Tastschaltern eine Funktion zugewiesen werden, die von der Anzeige auf der Anzeigefläche 2 abhängt.

Sowohl die Anzeigevorrichtung 1 mit dem Touchscreen als auch die weiteren Bedienelemente 5 und 6 sind mit einer Steuervorrichtung 3 verbunden. Mittels der Steuervorrichtung 3 kann die Position ermittelt werden, bei der die berührungsempfindliche Bedienoberfläche 4 von einem Betätigungselement berührt wird. Ferner wird die Betätigung der Bedienelemente 5 und 6 erfasst. Schließlich kann die Steuervorrichtung 3 Graphikdaten für die Anzeige auf der Anzeigefläche 2 erzeugen und an die Anzeigevorrichtung 1 übertragen. Die Graphikdaten können Schaltflächen 10 umfassen, die von einem Betätigungselement betätigt werden können.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche 2 erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Bedienoberfläche 4 der Anzeigefläche 2 erfolgen.

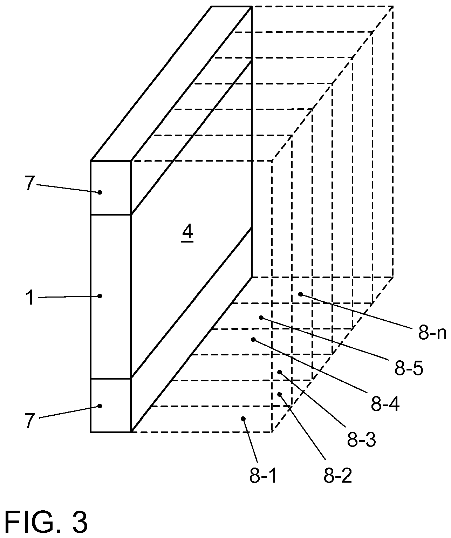

Des Weiteren umfasst die Bedienvorrichtung eine Annäherungserfassungseinrichtung 7. Mittels der Annäherungserfassungseinrichtung 7 kann ein Betätigungselement in einem Detektionsbereich 8 erfasst werden. Der Detektionsbereich 8 ist in den Fig. 2 und 3 im Detail dargestellt. Er ist in mehrere Detektionszonen 8-1 bis 8-n unterteilt, wobei n eine natürliche Zahl ist, welche die Anzahl der Detektionszonen angibt. Der Detektionsbereich 8 und die Detektionszonen 8-1 bis 8-n sind so gebildet, dass eine Annäherung eines Betätigungselements an die Bedienoberfläche 4 erfasst wird. Das Betätigungselement kann beispielsweise bei einer solchen Bewegung in den Detektionsbereich 8 eintreten oder durch diesen durchtreten. Die Detektionszonen 8-1 bis 8-n sind dabei so angeordnet, dass bei einer Bewegung des Betätigungselements in einer Richtung, die zumindest eine Komponente enthält, die parallel zu der Bedienoberfläche 4 ausgerichtet ist, das Betätigungselement von einer Detektionszone 8-m in einer andere Detektionszone 8-(m+1) wechselt, wobei m eine natürliche Zahl ist, die zwischen 0 und n liegt. Die Bewegung muß allerdings mit einem Mindestabstand vor der Bedienoberfläche 4 ausgeführt werden, damit das Betätigungselement überhaupt in den Detektionsbereich 8 eintritt.

In dem hier beschriebenen Ausführungsbeispiel bildet der Detektionsbereich 8 zumindest ein Volumen vor der Bedienoberfläche 4. Es ist insbesondere ein Quader gebildet, der mit seinen Seitenflächen in der Erstreckung, die parallel zu der Bedienoberfläche 4 verläuft, die Bedienoberfläche 4 vollständig umschließt. In einer Richtung senkrecht zur Bedienoberfläche 4 reicht der Quader von der Bedienoberfläche 4 oder unmittelbar vor der Bedienoberfläche 4 bis zu einem Abstand von z. B. etwa 40 cm. Der Abstand der äußeren Grenze des Detektionsbereichs 8 vor der Bedienoberfläche 4 wird dabei so gewählt, dass eine Annäherung an die Bedienoberfläche 4 so rechtzeitig detektiert werden kann, dass die Anzeige auf der Anzeigefläche 2 früh genug verändert werden kann, um den Nutzer bei einer Eingabe zu unterstützen. Ferner sollte der Abstand des Detektionsbereichs 8 von der Bedienoberfläche 4 so gewählt werden, dass das Betätigungselement oder ein anderes Objekt so selten wie möglich in den Detektionsbereich 8 bewegt wird, wenn keine Bedienung der Bedienoberfläche 4 beabsichtigt ist.

Die Unterteilung des Detektionsbereichs 8 in Detektionszonen 8-1 bis 8-n ist im Detail in Fig. 3 gezeigt. Jede Detektionszone 8-m bildet wiederum einen Quader. Die Ober- und Unterseite des Quaders für eine Detektionszone 8-m fällt mit der Ober- und Unterseite des Quaders des Detektionsbereichs 8 zusammen. Gleichermaßen bilden die Flächen, die der Bedienoberfläche 4 zu- bzw. abgewandt sind, die entsprechenden Flächen des Quaders für den Detektionsbereich 8. Der Quader des Detektionsbereichs 8 ist somit von den Quadern der Detektionszonen 8-1 bis 8-n vertikal unterteilt. Die Detektionszonen 8-1 bis 8-n erstrecken sich senkrecht von der Bedienoberfläche 4 weg. Wenn sich somit ein Betätigungselement parallel zu der Bedienoberfläche 4 in einem Abstand bewegt, der geringer als die Erstreckung des Detektionsbereichs 8 in einer Richtung senkrecht zu der Bedienoberfläche 4 ist, tritt das Betätigungselement bei einer seitlich äußersten Detektionszone, z. B. der Detektionszone 8-1, in den Detektionsbereich 8 ein, wechselt dann aufeinander folgend in die Detektionszonen 8-2, 8-3, ..., 8-n und tritt bei der letzten Detektionszone 8-n wieder aus dem Detektionsbereich 8 aus.

Der Verlauf der Grenzen zwischen den einzelnen Detektionszonen 8-m kann auch in Abhängigkeit von der Bewegungsrichtung von der Bedienposition eines Nutzers in Richtung eines Bedienelements 5 bzw. 6 gewählt werden, welches neben der Bedienoberfläche angeordnet sind. Die Grenzfläche zwischen zwei benachbarten Detektionszonen 8-m und 8-(m+1) steht insbesondere senkrecht auf der Bewegungsrichtung zu einem Bedienelement 5 bzw. 6 außerhalb der Bedienoberfläche 4. Sind mehrere weitere Bedienelemente 5 und 6 neben der Bedienoberfläche 4 angeordnet, ist die Lage der Grenzflächen zwischen benachbarten Detektionszonen so zu wählen, dass sichergestellt ist, dass bei einer Betätigung der weiteren Bedienelemente 5 und 6 jeweils das Betätigungselement durch mehrere Detektionszonen 8-m durchtritt. Im vorliegenden Fall verlaufen die Grenzebenen zwischen benachbarten Detektionszonen 8-m und 8-(m+1) vertikal und senkrecht zu der Bedienoberfläche 4, wenn diese senkrecht im Raum angeordnet ist.

Die Annäherungserfassungseinrichtung 7 kann die Aufenthaltsdauer des Betätigungselements in jeder einzelnen Detektionszone 8-m separat erfassen. Handelt es sich bei dem Betätigungselement um den Finger bzw. die Fingerspitze eines Nutzers, wird der Eintritt der Fingerspitze in eine Detektionszone 8-m als Beginn der Aufenthaltsdauer in der Detektionszone 8-m gewertet und der Eintritt der Fingerspitze in die benachbarte Detektionszone 8-(m+1) als Austritt aus der Detektionszone 8-m und Eintritt in die Detektionszone 8-(m+1) interpretiert, obwohl sich in diesem Fall der Finger bzw. die Hand des Nutzers immer noch in der vorherigen Detektionszone 8-m bzw. weiteren vorherigen Detektionszonen 8-(m-1) befinden kann.

Im Folgenden werden verschiedene Ausbildungen der Annäherungserfassungseinrichtung 7 erläutert:
Gemäß einer ersten Ausgestaltung emittiert die Annäherungserfassungseinrichtung elektromagnetische Detektionsstrahlung, vorzugsweise im infraroten Wellenlängenbereich, in den Detektionsbereich 8. Die Detektionsstrahlung tritt in geeigneter Weise in der Nähe der Anzeigevorrichtung 1 so aus, dass sie den gesamten Detektionsbereich 8 erfassen kann. Beispielsweise kann oberhalb und unterhalb der Bedienoberfläche 4 jeweils ein Emissionsfenster angeordnet sein, welches für die Detektionsstrahlung transparent ist. Hinter den Emissionsfenstern sind Leuchtmittel zum Emittieren der Detektionsstrahlung angeordnet. Bei den Leuchtmitteln handelt es sich beispielsweise um Leuchtdioden, die Licht im infraroten Wellenlängenbereich emittieren. Für jede Detektionszone können zwei oder mehr Leuchtmittel vorgesehen sein. Die von den Leuchtmitteln emittierte elektromagnetische Strahlung wird durch geeignete Optiken geleitet, so dass die Emission in die jeweilige Detektionszone 8-m gelangt.

Des Weiteren ist hinter den Emissionsfenstern für jede Detektionszone 8-m ein Empfangselement angeordnet. Bei dem Empfangselement kann es sich beispielsweise um eine Photodiode handeln. Um eine direkte Einstrahlung oder ein Auffangen von Streustrahlung der Leuchtmittel zu verhindern, ist über dem Empfangselement eine Abschirmung angeordnet, die eine Eintrittsöffnung umfasst. Unterhalb der Abschirmung befindet sich z. B. gemeinsam mit dem Empfangselement ein Referenzleuchtmittel, welches vorzugsweise identisch zu den Leuchtmitteln ausgebildet ist. Dieses Referenzleuchtmittel ist vorgesehen, um zeitlich alternierend zu den Leuchtmitteln Referenzstrahlung im selben Wellenlängen- bzw. Frequenzbereich wie die Leuchtmittel zu emittieren. Auf diese Weise kann eine Kompensation einer Hintergrundstrahlung im Fahrzeug erfolgen. Vor der Eintrittsöffnung der Abschirmung des Empfangselements kann eine weitere Optik vorgesehen sein, die Detektionsstrahlung der Leuchtmittel, die an einem Betätigungselement gestreut und/oder reflektiert wurde und die durch das Emissionsfenster hindurchgetreten ist, auf das Empfangselement fokussiert.

Die Annäherungserfassungseinrichtung umfasst ferner eine Ansteuerelektronik, um die Leuchtmittel sowie das Referenzleuchtmittel anzusteuern. Auf diese Weise ist es möglich, die von den einzelnen Leuchtmitteln und dem Referenzleuchtmittel emittierte Detektionsstrahlung bzw. Referenzstrahlung, leuchtmittelindividuell zu erzeugen. Die Detektionsstrahlung wird insbesondere frequenzmoduliert, wobei für eine Strahlungsemission, welche in jeweils dieselbe Detektionszone 8-m emittiert wird, dieselbe Modulation verwendet wird. Emissionen in verschiedene Detektionszonen 8-m unterscheiden sich jedoch hinsichtlich der Frequenzmodulation.

Die Annäherungserfassungseinrichtung umfasst ferner eine Auswerteeinheit, welche die empfangene gestreute bzw. reflektierte Detektionsstrahlung und/oder die Referenzstrahlung hinsichtlich der Intensität und Frequenzmodulation auswertet. Mittels der Auswerteeinheit kann insbesondere bestimmt werden, ob und gegebenenfalls wie lange sich ein Betätigungselement in einer bestimmten Detektionszone 8-m befindet. Falls erforderlich, kann dabei die Geometrie des Betätigungselements erfasst werden und nur ein Teil des Betätigungselements, wie z. B. die Fingerspitze eines Nutzers, für die Bestimmung der Aufenthaltsdauer in einer Detektionszone 8-m berücksichtigt werden.

Bei einer alternativen Ausbildung der Annäherungserfassungseinrichtung 7, werden Hochfrequenzsignale über den Körper des Nutzers übertragen und zur Positionserfassung der Fingerspitze des Nutzers und ggf. zur Bestimmung der Position des Nutzers verwendet:
Im Sitz des Nutzers, d. h. beispielsweise des Fahrers, befindet sich eine Elektrodenanordnung. Über diese Elektrodenanordnung werden Hochfrequenzsignale in den Körper des Nutzers eingekoppelt. Die eingekoppelten Hochfrequenzsignale werden von Sensoren kapazitiv empfangen, wenn sich der Nutzer mit seiner Fingerspitze den Sensoren annähert. Anhand mehrerer Sensoren, die bei oder hinter der Bedienoberfläche 4 angeordnet sind, kann über die Intensitäten der bei den einzelnen Sensoren ausgekoppelten Signale mittels Triangulation die Position der Fingerspitze des Nutzers im Raum, d. h. insbesondere im Detektionsbereich 8, bestimmt werden. Dabei ist es nicht erforderlich, dass die Bedienoberfläche 4 oder die Sensoren berührt werden.

Außerdem kann über die Elektrodenanordnung ein Identifikationscode kapazitiv in den Körper des Nutzers eingekoppelt werden und bei den Sensoren in der Anzeigevorrichtung 1 ausgekoppelt werden. Über den Körper des Nutzers kann somit ein Identifikationscode übertragen werden, welcher angibt, von welcher Bedienposition aus der Nutzer sich der Bedienoberfläche 4 annähert. Falls entsprechende Elektrodenanordnungen sowohl im Fahrersitz, als auch im Beifahrersitz angeordnet sind, kann der Steuervorrichtung 3 ein Signal übertragen werden, welches angibt, ob es sich bei dem Nutzer des Betätigungselements um den Fahrer oder den Beifahrer handelt. Diese Art der Identifizierung der Bedienposition kann auch in Verbindung mit anderen Ausgestaltungen der Annäherungserfassungseinrichtung 7 eingesetzt werden. Das Grundprinzip dieser Ausgestaltung der Annäherungserfassungseinrichtung 7 und weitere Details der Signalübertragung, sind in der DE 10 2004 048 956 A1 und der WO 2004/078536 A2 beschrieben.

Bei einer weiteren Ausgestaltung der Annäherungserfassungseinrichtung 7 wird die Position des Betätigungselements im Detektionsbereich 8 wie folgt erfasst:
Entlang einer virtuellen Zeile wird ein Sende- und Empfangsschema konzipiert, mit dem der Aufenthaltsbereich des Betätigungselements kontinuierlich mit einem eng gebündelten Infrarotlichtstrahl gescannt wird. Dabei werden die einzelnen Sendeorte entlang der virtuellen Zeile fortlaufend zur Abgabe eines einzelnen Infrarotlichtimpulses veranlasst. Ist der letzte Sendeort in der Zeile, wird als Nächstes wieder der erste Sendeort angesteuert, so dass der gescannte Infrarotlichtstrahl zyklisch den Detektionsbereich 8 immer wieder von einer Seite zur anderen durchläuft. In Abhängigkeit vom Sendetakt der Infrarotlichtpulse, kann damit der Detektionsbereich 8 ununterbrochen gescannt und die Position des Betätigungselements detektiert werden. Die Messung der reflektierten Infrarotlichtpulsanteile ist an den Takt der ausgesendeten Infrarotlichtpulse angepasst. Die Zuordnung zu den einzelnen Sendeorten bzw. zu deren Einfallsbereich bestimmt dabei die Empfangscharakteristik der Messung. Details dieser Positionsermittlung eines Betätigungselements sind in der DE 100 58 244 C2 beschrieben.

Schließlich kann die Position des Betätigungselements auch mittels eines Kamerasystems und nachgeordneter Bildverarbeitung sowie durch ein Ultraschallsensorsystem erfolgen.

Die Annäherungserfassungseinrichtung 7 überträgt die aktuelle Position eines Betätigungselements im Detektionsbereich 8 fortwährend an die Steuervorrichtung 3. Die Steuervorrichtung 3 ordnet der aktuellen Position des Betätigungselements einer Detektionszone 8-m zu und bestimmt die Aufenthaltsdauer des Betätigungselements in einer Detektionszone 8-m, sofern dies nicht bereits in der Annäherungserfassungsvorrichtung 7 erfolgt ist. Jeder Detektionszone 8-m ist ein Grenzwert für die Aufenthaltsdauer eines Betätigungselements zugeordnet. Wird dieser Grenzwert für eine Detektionszone 8-m überschritten, erzeugt die Steuervorrichtung 3 ein Signal für eine Bedienabsicht eines Nutzers. Dieses Signal zeigt an, dass die Steuervorrichtung 3 ermittelt hat, dass der Nutzer mit dem Betätigungselement die Bedienoberfläche 4 betätigen will. In Abhängigkeit von diesem Signal kann die Steuervorrichtung 3 die Anzeige auf der Anzeigefläche 2 verändern. Beispielsweise können die Schaltflächen 10, nachdem die Bedienabsicht zur Betätigung der Bedienoberfläche 4 erfasst worden ist, vergrößert dargestellt werden, so dass sie der Nutzer leichter mit seiner Fingerspitze treffen kann. Selbstverständlich können auch beliebige andere Veränderungen der Anzeige erzeugt werden.

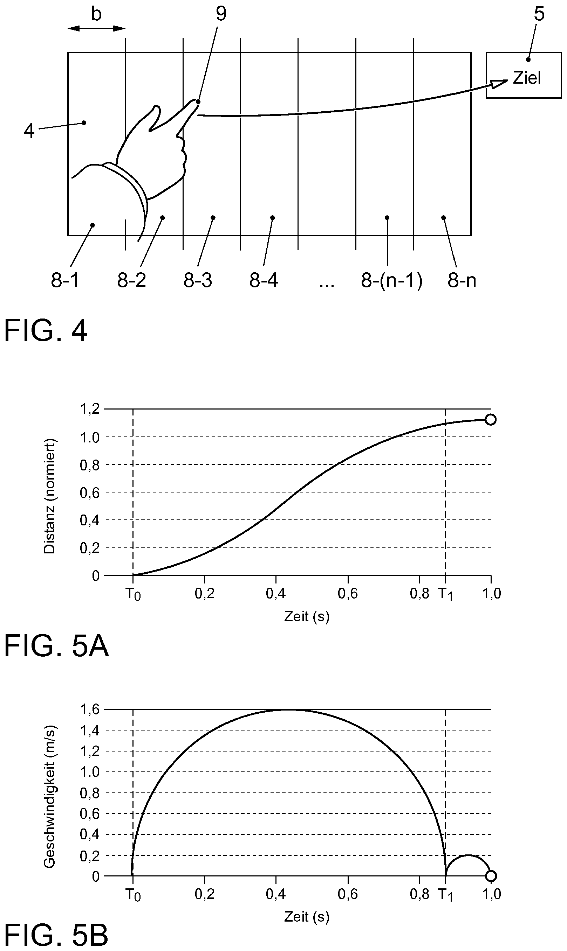

Im Folgenden wird mit Bezug zu den Fig. 4 bis 6 erläutert, wie die Grenzwerte für die Aufenthaltsdauer für die einzelnen Detektionszonen 8-m ermittelt werden können:
In Fig. 4 ist schematisch die Einteilung der Bedienoberfläche 4 in die Zonen 8-1 bis 8-n gezeigt. Ferner ist ein weiteres Bedienelement 5 gezeigt, welches außerhalb der Bedienoberfläche 4 liegt. Der Nutzer, welcher die Bedienoberfläche 4 oder das Bedienelement 5 betätigt, ist in diesem Fall der Fahrer, welcher auf dem Fahrersitz sitzt und die Bedienoberfläche 4 bzw. das Bedienelement 5 von links her betätigt. Um das weitere Bedienelement 5 zu betätigen, muss der Fahrer mit dem Betätigungselement, welches in diesem Fall seine Fingerspitze 9 ist, diese seitlich an der Bedienoberfläche 4 vorbeiführen. Dabei kann er der Bedienoberfläche 4 mit seiner Fingerspitze 9 relativ nahe kommen, so dass herkömmliche Annäherungserfassungseinrichtungen 7 bereits auf eine Bedienabsicht für die Betätigung der Bedienoberfläche 4 schließen würden, wenn der Nutzer seine Fingerspitze 9 an der Bedienoberfläche 4 vorbeibewegt, um das Bedienelement 5 zu betätigen. Derartige Fehlauslösungen sollen bei der erfindungsgemäßen Bedienvorrichtung bzw. dem erfindungsgemäßen Verfahren vermieden werden.

In einem ersten Schritt kann jeder Detektionszone 8-m, in Abhängigkeit von der Breite b einer Zone 8-m, derselbe Grenzwert für die Aufenthaltsdauer zugeordnet werden. Wird ein herkömmlicher Touchscreen in einem Fahrzeug beispielsweise in sieben Detektionszonen unterteilt, kann der Grenzwert für die Aufenthaltsdauer in einer Zone 8-m 30 ms sein. Bewegt sich der Nutzer mit seiner Fingerspitze 9 zu dem Bedienelement 5, wird die Geschwindigkeit der Fingerspitze 9, bei dieser Bewegung so groß sein, dass sie nicht für ein Zeitintervall von 30 ms in einer der Detektionszonen 8-1 bis 8-n verweilt. Für die Bestimmung des Grenzwertes ist dabei die Horizontalkomponente der Geschwindigkeit bei der Bewegung relevant, da die Detektionszonen 8-m den Detektionsbereich 8 vertikal unterteilen.

Nachteilig an der Verwendung des Grenzwerts für die Aufenthaltsdauer in einer Detektionszone 8-m ist jedoch, dass das Signal für die Bedienabsicht zur Betätigung der Bedienoberfläche 4 erst nach Ablauf eines Zeitintervalls erzeugt wird, welches dem Grenzwert entspricht. Es ist daher wünschenswert, den Grenzwert so klein wie möglich zu wählen, damit die Verzögerung bei der Erzeugung des Signals für die Bedienabsicht zur Betätigung der Bedienoberfläche 4, so kurz wie möglich ist. Wird für alle Detektionszonen 8-m jeweils derselbe Grenzwert verwendet, ergibt sich der Nachteil, dass er für Detektionszonen, in denen die übliche Bewegungsgeschwindigkeit in horizontaler Richtung beim Vorbeigreifen an der Bedienoberfläche 4 relativ hoch ist, eigentlich niedriger gewählt werden könnte.

In einem zweiten Schritt wird daher die Greifbewegung eines Nutzers zum Betätigen eines Bedienelements 5 analysiert, welches seitlich neben der Bedienoberfläche 4 liegt. Der Zeit/Weg-Verlauf einer typischen Bedienbewegung bei der Betätigung des Bedienelements 5, wie es in Fig. 4 dargestellt ist, ist in Fig. 5A gezeigt. Der sich daraus ergebene Geschwindigkeitsverlauf ist in Fig. 5B gezeigt. Es ergibt sich, dass die Bedienbewegung bei der Betätigung des Bedienelements 5 keine konstante oder lineare Geschwindigkeit aufweist. Vielmehr steigt die Geschwindigkeit in einer anfänglichen so genannten ballistischen Phase stark an, wobei mit relativ hoher Geschwindigkeit die gesamte Strecke bis zum Ziel bis auf wenige Zentimeter (weniger als 5 cm) zurückgelegt wird und mit einem deutlichen Abbremsen der Bewegung endet. Daran schließt sich eine so genannte Selektionsphase an, bei welcher mit einer geringeren Geschwindigkeit die restlichen Zentimeter zum Ziel zurückgelegt werden. Die Selektionsphase kann sich dabei aus mehreren Teilbewegungen zusammensetzen, während die ballistische Phase nur aus einer Teilbewegung besteht. Üblich sind zwei bis drei Teilbewegungen in der Selektionsphase. Die charakteristischen Maximalgeschwindigkeiten der ballistischen Phase und der Selektionsphase ergeben sich jeweils etwa in der Mitte der Teilbewegungen und unterscheiden sich maßgeblich voneinander.

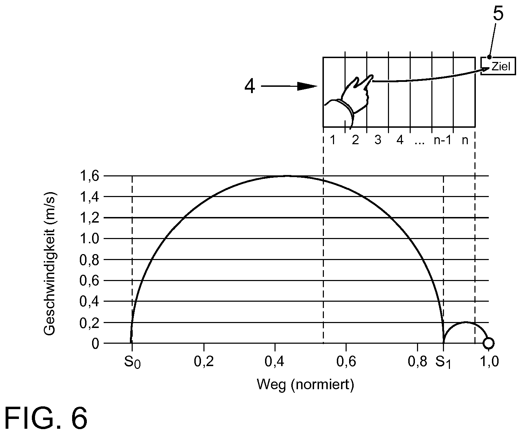

Bei dem erfindungsgemäßen Verfahren und bei der erfindungsgemäßen Bedienvorrichtung wird dieser Geschwindigkeitsverlauf für die Festlegung der Grenzwerte für die Aufenthaltsdauer in den einzelnen Detektionszonen 8-m ausgenutzt. In Fig. 6 ist die Geschwindigkeit des Betätigungselements in Abhängigkeit von der Position des Betätigungselements relativ zu der Bedienoberfläche 4 und dem Bedienelement 5 gezeigt. In den Detektionszonen 8-m, bei welchen das Betätigungselement in den Detektionsbereich 8 eintritt, ist die Geschwindigkeit parallel zu der Bedienoberfläche 4 in horizontaler Richtung sehr viel größer als in späteren Detektionszonen 8-m, die näher bei dem Bedienelement 5 gelegen sind und die weiter entfernt von der Bedienposition des Nutzers sind. In den dem Nutzer zugewandten Detektionszonen 8-m, ist die Horizontalgeschwindigkeit des Betätigungselements parallel zu der Bedienoberfläche 4 somit höher als bei von der Bedienposition des Nutzers abgewandten Detektionszonen 8-m. Die Grenzwerte für die Aufenthaltsdauer in den Detektionszonen 8-m können somit von der ersten Detektionszone 8-1 zu der letzten Detektionszone 8-n kontinuierlich zunehmen. Im vorliegenden Fall wird der Grenzwert für die erste Detektionszone 8-1 zu 10 ms gewählt, der Grenzwert für die letzte Detektionszone 8-n zu 30 ms gewählt.

Durch die Wahl der unterschiedlichen Grenzwerte für die einzelnen Zonen 8-m kann die Verzögerung zwischen dem Eintritt in den Detektionsbereich 8 und dem Erzeugen des Signals für die Bedienabsicht für die Betätigung der Bedienfläche 4 erheblich reduziert werden, insbesondere wenn der Nutzer das Betätigungselement innerhalb einer Detektionszone 8-m bewegt, für welche ein niedriger Grenzwert gewählt wurde, d. h. einer Detektionszone 8-m, die nahe bei der Bedienposition des Nutzers liegt. Gleichzeitig kann jedoch sicher erfasst werden, wenn nicht die Bedienoberfläche 4, sondern ein Bedienelement 5, 6 außerhalb der Bedienoberfläche 4 betätigt werden soll.

### BEZUGSZEICHENLISTE

- 1: Anzeigevorrichtung
- 2: Anzeigefläche
- 3: Steuervorrichtung
- 4: Bedienoberfläche
- 5: weitere Bedienelemente
- 6: weitere Bedienelemente
- 7: Annäherungserfassungseinrichtung
- 8: Detektionsbereich
- 8-1 bis 8-n: Detektionszonen
- 9: Fingerspitze eines Nutzers
- 10: Schaltflächen

## Patentansprüche

1. Verfahren zum Betreiben einer Bedienvorrichtung, insbesondere in einem Fahrzeug, wobei die Bedienvorrichtung ein Bedienelement mit einer Bedienoberfläche (4) umfasst, wobei bei dem Verfahren
- ein Detektionsbereich (8) gebildet wird, der in mehrere Detektionszonen (8-1 bis 8-n) unterteilt ist,
- die Aufenthaltsdauer eines Betätigungselements (9) in den einzelnen Detektionszonen (8-1 bis 8-n) bestimmt wird
- die Detektionszonen (8-1 bis 8-n) so angeordnet sind, dass bei einer Bewegung des Betätigungselements (9) in einer Richtung, die parallel zu der Bedienoberfläche (4) ist, das Betätigungselement (9) von einer Detektionszone (8-1 bis 8-n) in eine andere Detektionszone (8-1 bis 8-n) wechselt, und
- ein Signal für eine Bedienabsicht eines Nutzers erzeugt wird, wenn die Aufenthaltsdauer des Betätigungselements (9) in einer Detektionszone (8-1 bis 8-n) einen Grenzwert überschreitet,
**dadurch gekennzeichnet, dass**
- sich der Grenzwert für zumindest zwei Detektionszonen (8-1 bis 8-n) unterscheidet, wobei der Grenzwert einer Detektionszone (8-1 bis 8-n) von dem Abstand dieser Detektionszone (8-1 bis 8-n) von einer Bedienposition im Fahrzeug in einer zu der Bedienoberfläche (4) parallelen Richtung abhängt.

2. Verfahren nach Anspruch 1,
**dadurch gekennzeichnet,**
**dass** die Detektionszonen (8-1 bis 8-n) so aneinander grenzen, dass bei einer Bewegung des Betätigungselements (9) in einer Richtung, die parallel zu der Bedienoberfläche (4) ist, das Betätigungselement (9) von einer Detektionszone (8-1 bis 8-n) unmittelbar in eine angrenzende Detektionszone (8-1 bis 8-n) wechselt.

3. Verfahren nach Anspruch 1 oder 2,
**dadurch gekennzeichnet,**
**dass** der Detektionsbereich (8) ein Volumen vor der Bedienoberfläche (4) umfasst.

4. Verfahren nach Anspruch 1,
**dadurch gekennzeichnet,**
**dass** der Grenzwert für die Aufenthaltsdauer in einer Detektionszone (8-1 bis 8-n) umso kürzer ist, desto näher die Detektionszone (8-1 bis 8-n) an der Bedienposition eines Nutzers ist.

5. Verfahren nach einem der vorhergehenden Ansprüche,
**dadurch gekennzeichnet,**
**dass** die Grenzwerte für die Aufenthaltsdauer für die Detektionszonen (8-1 bis 8-n) in Abhängigkeit von dem zeitlichen Verlauf einer Greifbewegung eines Nutzers zu der Bedienoberfläche (4) des Bedienelements und von dem zeitlichen Verlauf einer Greifbewegung eines Nutzers zu einem Ziel außerhalb des Bedienelements bestimmt werden.

6. Verfahren nach einem der vorhergehenden Ansprüche,
**dadurch gekennzeichnet,**
**dass** das Signal für die Bedienabsicht eines Nutzers bewirkt, dass eine die Betätigung des Bedienelements unterstützende Anzeige erzeugt wird.

7. Bedienvorrichtung, insbesondere in einem Fahrzeug, mit
- einem Bedienelement, das eine Bedienoberfläche (4) aufweist, und
- einer Annäherungserfassungseinrichtung (7), mit der ein Betätigungselement in einem Detektionsbereich (8) erfassbar ist, wobei der Detektionsbereich (8) in mehrere Detektionszonen (8-1 bis 8-n) unterteilt ist, wobei die Aufenthaltsdauer des Betätigungselements (9) in den einzelnen Detektionszonen (8-1 bis 8-n) bestimmbar ist und wobei die Annäherungserfassungseinrichtung (7) so ausgebildet ist, dass ein Signal für eine Bedienabsicht eines Nutzers erzeugbar ist, wenn die Aufenthaltsdauer des Betätigungselements (9) in einer Detektionszone (8-1 bis 8-n) einen Grenzwert überschreitet,
- wobei die Detektionszonen (8-1 bis 8-n) so angeordnet sind, dass bei einer Bewegung des Betätigungselements (9) in einer Richtung, die parallel zu der Bedienoberfläche (4) ist, das Betätigungselement (9) von einer Detektionszone (8-1 bis 8-n) in eine andere Detektionszone (8-1 bis 8-n) wechselt,
**dadurch gekennzeichnet, dass**
- sich der Grenzwert für zumindest zwei Detektionszonen (8-1 bis 8-n) unterscheidet, wobei der Grenzwert einer Detektionszone (8-1 bis 8-n) von dem Abstand dieser Detektionszone (8-1 bis 8-n) von einer Bedienposition im Fahrzeug in einer zu der Bedienoberfläche (4) parallelen Richtung abhängt.

8. Bedienvorrichtung nach Anspruch 7,
**dadurch gekennzeichnet,**
**dass** der Grenzwert für die Aufenthaltsdauer in einer Detektionszone umso kürzer ist, desto näher die Detektionszone an der Bedienposition eines Nutzers ist.

9. Bedienvorrichtung nach Anspruch 7 oder 8,
**dadurch gekennzeichnet,**
**dass** die Grenzwerte für die Aufenthaltsdauer für die Detektionszonen (8-1 bis 8-n) in Abhängigkeit von dem zeitlichen Verlauf einer Greifbewegung eines Nutzers zu der Bedienoberfläche (4) des Bedienelements und von dem zeitlichen Verlauf einer Greifbewegung eines Nutzers zu einem Ziel außerhalb des Bedienelements auswählbar sind.

10. Bedienvorrichtung nach einem der Ansprüche 7 bis 9,
**dadurch gekennzeichnet,**
**dass** die Bedienoberfläche (4) berührungsempfindlich ist.

11. Bedienvorrichtung nach einem der Ansprüche 7 bis 10,
**dadurch gekennzeichnet,**
**dass** das Bedienelement eine Anzeigefläche (2) mit einer berührungsempfindlichen Bedienoberfläche (4) aufweist, dass das Bedienelement und die Annäherungserfassungseinrichtung (7) mit einer Steuervorrichtung (3) gekoppelt sind, mittels derer die für die Anzeigefläche (2) wiedergegebene Anzeige in Abhängigkeit von dem Signal für die Bedienabsicht eines Nutzers veränderbar ist.

12. Bedienvorrichtung nach einem der Ansprüche 7 bis 11,
**dadurch gekennzeichnet,**
**dass** neben der Bedienoberfläche (4) zumindest ein weiteres Bedienelement (5, 6) so im Fahrzeug angeordnet ist, dass sich bei einer Betätigung des weiteren Bedienelements (5, 6) das Betätigungselement (9) durch den Detektionsbereich (8) bewegt.

## Claims

1. Method for operating an operational control device, in particular in a vehicle, wherein the operational control device comprises an operational control element having an operator interface (4), wherein in the method
- a detection region (8) is formed, which is subdivided into a plurality of detection zones (8-1 to 8-n),
- the residence duration of an actuation element (9) in the individual detection zones (8-1 to 8-n) is determined,
- the detection zones (8-1 to 8-n) are arranged such that upon a movement of the actuation element (9) in a direction which is parallel to the operator interface (4), the actuation element (9) changes from one detection zone (8-1 to 8-n) to another detection zone (8-1 to 8-n), and
- a signal for an operational control intention of a user is generated if the residence duration of the actuation element (9) in a detection zone (8-1 to 8-n) exceeds a limit value,
**characterized in that**
- the limit value is different for at least two detection zones (8-1 to 8-n), wherein the limit value of a detection zone (8-1 to 8-n) depends on the distance between this detection zone (8-1 to 8-n) and an operational control position in the vehicle in a direction parallel to the operator interface (4).

2. Method according to Claim 1,
**characterized**
**in that** the detection zones (8-1 to 8-n) adjoin one another such that upon a movement of the actuation element (9) in a direction which is parallel to the operator interface (4), the actuation element (9) changes from one detection zone (8-1 to 8-n) directly to an adjoining detection zone (8-1 to 8-n).

3. Method according to Claim 1 or 2,
**characterized**
**in that** the detection region (8) comprises a volume in front of the operator interface (4).

4. Method according to Claim 1,
**characterized**
**in that** the limit value for the residence duration in a detection zone (8-1 to 8-n) is all the shorter, the nearer the detection zone (8-1 to 8-n) is to the operational control position of a user.

5. Method according to any of the preceding claims,
**characterized**
**in that** the limit values for the residence duration for the detection zones (8-1 to 8-n) are determined depending on the temporal profile of a gripping movement of a user with respect to the operator interface (4) of the operational control element and depending on the temporal profile of a gripping movement of a user with respect to a target outside the operational control element.

6. Method according to any of the preceding claims,
**characterized**
**in that** the signal for the operational control intention of a user causes a display supporting the actuation of the operational control element to be generated.

7. Operational control device, in particular in a vehicle, comprising
- an operational control element having an operator interface (4), and
- an approach sensing unit (7), which is able to sense an actuation element in a detection region (8), wherein the detection region (8) is subdivided into a plurality of detection zones (8-1 to 8-n), wherein the residence duration of the actuation element (9) in the individual detection zones (8-1 to 8-n) is able to be determined, and wherein the approach sensing unit (7) is configured such that a signal for an operational control intention of a user is able to be generated if the residence duration of the actuation element (9) in a detection zone (8-1 to 8-n) exceeds a limit value,
- wherein the detection zones (8-1 to 8-n) are arranged such that upon a movement of the actuation element (9) in a direction which is parallel to the operator interface (4), the actuation element (9) changes from one detection zone (8-1 to 8-n) to another detection zone (8-1 to 8-n),
**characterized in that**
- the limit value is different for at least two detection zones (8-1 to 8-n), wherein the limit value of a detection zone (8-1 to 8-n) depends on the distance between this detection zone (8-1 to 8-n) and an operational control position in the vehicle in a direction parallel to the operator interface (4).

8. Operational control device according to Claim 7,
**characterized**
**in that** the limit value for the residence duration in a detection zone is all the shorter, the nearer the detection zone is to the operational control position of a user.

9. Operational control device according to Claim 7 or 8,
**characterized**
**in that** the limit values for the residence duration for the detection zones (8-1 to 8-n) are able to be selected depending on the temporal profile of a gripping movement of a user with respect to the operator interface (4) of the operational control element and depending on the temporal profile of a gripping movement of a user with respect to a target outside the operational control element.

10. Operational control device according to any of Claims 7 to 9,
**characterized**
**in that** the operator interface (4) is touch-sensitive.

11. Operational control device according to any of Claims 7 to 10,
**characterized**
**in that** the operational control element has a display surface (2) having a touch-sensitive operator interface (4), in that the operational control element and the approach sensing unit (7) are coupled to a control device (3), by means of which the display reproduced for the display surface (2) is variable depending on the signal for the operational control intention of a user.

12. Operational control device according to any of Claims 7 to 11,
**characterized**
**in that** besides the operator interface (4) at least one further operational control element (5, 6) is arranged in the vehicle such that upon an actuation of the further operational control element (5, 6), the actuation element (9) moves through the detection region (8).

## Revendications

1. Procédé pour faire fonctionner un dispositif de commande opérationnelle, en particulier dans un véhicule, dans lequel le dispositif de commande opérationnelle comprend un élément de commande opérationnelle ayant une interface opérateur (4), le procédé comprenant les éléments suivants
- une région de détection (8) est formée, laquelle est divisée en une pluralité de zones de détection (8-1 à 8-n),
- la durée de permanence d'un élément d'actionnement (9) dans les zones de détection individuelles (8-1 à 8-n) est déterminée,
- les zones de détection (8-1 à 8-n) sont agencées de telle sorte que lors d'un mouvement de l'élément d'actionnement (9) dans une direction parallèle à l'interface opérateur (4), l'élément d'actionnement (9) passe d'un zone de détection (8-1 à 8-n) à une autre zone de détection (8-1 à 8-n), et
- un signal traduisant une intention de commande opérationnelle d'un utilisateur est généré si la durée de permanence de l'élément d'actionnement (9) dans une zone de détection (8-1 à 8-n) dépasse une valeur limite,
**caractérisé en ce que**
la valeur limite est différente pour au moins deux zones de détection (8-1 à 8-n), la valeur limite d'une zone de détection (8-1 à 8-n) dépendant de la distance entre cette zone de détection (8-1 à 8-n) et une position de commande opérationnelle dans le véhicule dans une direction parallèle à l'interface opérateur (4) .

2. Procédé selon la revendication 1,
**caractérisé en ce que**
- les zones de détection (8-1 à 8-n) sont contiguës de telle sorte que lors d'un mouvement de l'élément d'actionnement (9) dans une direction parallèle à l'interface opérateur (4), l'élément d'actionnement (9) passe directement d'un zone de détection (8-1 à 8-n) à une zone de détection adjacente (8-1 à 8-n), et

3. Procédé selon la revendication 1 ou 2,
**caractérisé en ce que**
la région de détection (8) comprend un volume devant l'interface opérateur (4).

4. Procédé selon la revendication 1,
**caractérisé en ce que**
la valeur limite pour la durée de permanence dans une zone de détection (8-1 à 8-n) est d'autant plus faible que la zone de détection (8-1 à 8-n) est proche de la position de commande opérationnelle d'un utilisateur.

5. Procédé selon l'une quelconque des revendications précédentes,
**caractérisé en ce que**
les valeurs limites pour la durée de permanence pour les zones de détection (8-1 à 8-n) sont déterminées en fonction du profil temporel d'un mouvement de préhension d'un utilisateur par rapport à l'interface opérateur (4) de l'élément de commande opérationnelle et en fonction du profil temporel d'un mouvement de préhension d'un utilisateur par rapport à une cible extérieure à l'élément de commande opérationnelle.

6. Procédé selon l'une quelconque des revendications précédentes,
**caractérisé en ce que**
le signal traduisant l'intention de commande opérationnelle d'un utilisateur provoque la génération d'un affichage prenant en charge l'actionnement de l'élément de commande opérationnelle.

7. Dispositif de commande opérationnelle, en particulier dans un véhicule, comprenant
- un élément de commande opérationnelle comportant une interface opérateur (4), et
- une unité de détection d'approche (7), à l'aide de laquelle peut être détecté un élément d'actionnement dans une région de détection (8), la région de détection (8) étant subdivisée en une pluralité de zones de détection (8-1 à 8-n),
dans lequel la durée de permanence de l'élément d'actionnement (9) dans les zones de détection individuelles (8-1 à 8n) est déterminée, et
dans lequel l'unité de détection d'approche (7) est configurée de sorte qu'un signal traduisant une intention de commande opérationnelle d'un utilisateur soit généré si la durée de permanence de l'élément d'actionnement (9) dans une zone de détection (8-1 à 8-n) dépasse une valeur limite,
- dans lequel les zones de détection (8-1 à 8-n) sont agencées de telle sorte que lors d'un mouvement de l'élément d'actionnement (9) dans une direction parallèle à l'interface opérateur (4), l'élément d'actionnement (9) passe d'une zone de détection (8-1 à 8-n) à une autre zone de détection (8-1 à 8-n),
**caractérisé en ce que**
- la valeur limite est différente pour au moins deux zones de détection (8-1 à 8-n), la valeur limite d'une zone de détection (8-1 à 8-n) dépendant de la distance entre cette zone de détection (8-1 à 8-n) et une position de commande opérationnelle dans le véhicule dans une direction parallèle à l'interface opérateur (4).

8. Dispositif de commande opérationnelle selon la revendication 7,
**caractérisé en ce que**
la valeur limite pour la durée de permanence dans une zone de détection est d'autant plus faible que la zone de détection est proche de la position de commande opérationnelle d'un utilisateur.

9. Dispositif de commande opérationnelle selon la revendication 7 ou 8,
**caractérisé en ce que**
les valeurs limites pour la durée de permanence pour les zones de détection (8-1 à 8-n) peuvent être sélectionnées en fonction du profil temporel d'un mouvement de préhension d'un utilisateur par rapport à l'interface opérateur (4) de l'élément de commande opérationnelle et en fonction du profil temporel d'un mouvement de préhension d'un utilisateur par rapport à une cible extérieure à l'élément de commande opérationnelle.

10. Dispositif de commande opérationnelle selon l'une quelconque des revendications 7 à 9,
**caractérisé en ce que**
l'interface opérateur (4) est tactile.

11. Dispositif de commande opérationnelle selon l'une quelconque des revendications 7 à 10,
**caractérisé en ce que**
l'élément de commande opérationnelle comporte une surface d'affichage (2) comprenant une interface opérateur tactile (4), **en ce que** l'élément de contrôle opérationnel et l'unité de détection d'approche (7) sont couplés à un dispositif de commande (3) au moyen duquel l'affichage reproduit pour la surface d'affichage (2) est variable en fonction du signal traduisant l'intention de commande opérationnelle d'un utilisateur.

12. Dispositif de commande opérationnelle selon l'une quelconque des revendications 7 à 11,
**caractérisé en ce que**
outre l'interface utilisateur (4), au moins un autre élément de commande opérationnelle (5, 6) est agencé dans le véhicule de telle sorte que lors d'un actionnement de l'autre élément de commande opérationnelle (5, 6), l'élément d'actionnement (9) se déplace à travers la région de détection (8).
